# EUROPÄISCHE PATENTSCHRIFT

(11) **EP 0 867 320 B1**
(45) Veröffentlichungstag und Bekanntmachung des Hinweises auf die Patenterteilung: **16.11.2005**
(21) Anmeldenummer: 97121767.4
(22) Anmeldetag: 10.12.1997
(51) Int. Cl.: B60H 1/32, F25B 43/00

(54) **Klimaanlage**
Air conditioning device
Dispositif de conditionnement d'air

(30) Priorität: 25.03.1997 DE 29705398 U
(43) Veröffentlichungstag der Anmeldung: 30.09.1998
(73) Patentinhaber: Deutsche Controls GmbH, 80637 München (DE)
(72) Erfinder: Edel, Jacques, 92100 Boulogne-Billancourt (FR); Bernini, Michele, 43100 Parma (IT); Ehs, Eugen, 80797 München (DE)
(74) Vertreter: Grünecker, Kinkeldey, Stockmair & Schwanhäusser Anwaltssozietät

(56) Entgegenhaltungen:
- US-A- 3 175 342
- US-A- 4 209 401
- US-A- 4 255 940
- US-A- 4 637 881

## Beschreibung

Die Erfindung betrifft eine Klimaanlage der im Oberbegriff des Anspruchs 1 angegebenen Art.

In Fahrzeug-Klimaanlagen muss dem Kältemittel aus Gründen der Betriebssicherheit permanent Wasser entzogen werden. Hierzu dient eine im Kühlkreislauf vom Kältemittel beaufschlagte Exsikkans-Charge, z.B. ein Zeolith-Granulat oder ähnliches, hygroskopisches Material.

In einer aus US 3 175 342 A bekannten Klimaanlage mit einem Expansionsventil ist ein Trocknerbehälter mit der Exsikkans-Charge an der Hochdruckseite des Leitungskreises vorgesehen. Der Trocknerbehälter ist mit Halterungen zwischen zwei Kältemittel-Leitungsabschnitte eingesetzt.

In mit einer Regelblende arbeitenden Klimaanlagen wird ein Akkumulator-Behälter zwischen Leitungsabschnitte eingesetzt, der Ölabscheide- und Zwischenspeicher-Funktionen erbringt und die Exsikkans-Charge aufnimmt. Für den Behälter sind eigene Halterungen erforderlich. In jedem Fall wird zur Unterbringung der Exsikkans-Charge ein eigenes Gehäuse verwendet, mit dem zusätzliches Gewicht, eigene Halterungen und Abdichtungen und notwendiger Einbauraum verbunden sind.

Femer ist es bekannt, die Exsikkans-Charge in eine Sammelkammer des Kondensators einzusetzen, meist in einem formstabilen und durchströmbaren Käfig.

Die Maßnahmen zum Unterbringen der Exsikkans-Charge sind ein bedeutsamer Kostenfaktor für die Klimaanlage. Von den die Klimaanlagen einbauenden Fahrzeugherstellern wird permanent eine Einsparung an Kosten, Gewicht und Bauraum für die einzelnen Komponenten der Klimaanlage gefordert. Stand der Technik zu solchen Systemen ist zu finden in DE-A-36 06 029, DE-A-43 19 293, DE-A-40 35 071 und DE-A-40 18 585. Weitere Beispiele für mit eigenen Gehäusen versehene und jeweils in eine Lücke im Leitungssystem installierte Trocknergehäuse sind offenbart in: US-4 255 940 A, US-4 637 881 A und US- 4 209 401 A.

Der Erfindung liegt die Aufgabe zugrunde, eine Klimaanlage der eingangs genannten Art baulich zu vereinfachen, ohne den üblichen Standard der Betriebssicherheit zu beeinträchtigen.

Die gestellte Aufgabe wird mit den Merkmalen des Anspruchs 1 gelöst.

Ohne den nennenswerten zusätzlichen baulichen Aufwand eines eigenen Gehäuses wird wenigstens ein integraler Leistungsabschnittsbereich der ohnedies für die Kältemittelströmung notwendigen Leitungsabschnitte zum Unterbringen der Exsikkans-Charge genutzt. Dabei wird die Charge im Inneren eines Rohrs oder eines Schlauches untergebracht, d.h., in dem Strömungsführungselement, das ohnedies für Klimaanlagen üblicher Ausrüstungs-Standard ist. Bei Klimaanlagen mit einem Expansionsventil werden der druckfeste Trocknerbehälter mit seiner Halterung und der dafür notwendige Einbauraum eingespart. Bei Klimaanlagen mit einer Blende lässt sich das Akkumulator-Ölabscheider Gehäuse kleiner und einfacher auslegen oder sogar einsparen. Bei Klimaanlagen, die die Exsikkans-Charge im Kondensator aufwiesen, lässt sich der Kondensator baulich einfacher, leichter und platzsparender gestalten. In jedem Fall wird trotz der baulichen Vereinfachung die Betriebssicherheit nicht beeinträchtigt. Die Charge kann an der Hochdruck- oder an der Niederdruckseite des Kältemittel-Leitungskreises vorgesehen sein. An der Hochdruckseite ist das Kältemittel in zumindest überwiegend flüssigem Zustand, während es an der Niederdruckseite in zumindest überwiegend gasförmigen Zustand strömt. Der an der Niederdruckseite zum Unterbringen der Charge benutzte, gegebenenfalls im Querschnitt vergrößerte, Leitungsabschnitt könnte eine Akkumulatorfunktion für den Kältemitteldampf erbringen (der für den Kompressor wichtig sein kann), und gegebenenfalls auch eine Ölabscheidefunktion haben (indem z.B. ein kleiner Ölsumpf mit einem Nachsaugfilter untergebracht wird).

Gemäß Anspruch 2 wird besonders gewinnbringend ein neues Kunststoffmaterial für den Leitungsabschnitt verwendet, der die Exsikkans-Charge aufnimmt, und das sich bei leichter Verarbeitbarkeit (Spritzguss oder Extrusion) durch geringes Gewicht und hohe Druck- und Temperaturfestigkeit auszeichnet, nämlich langfaserverstärkter Thermoplast (Handelsbezeichnung: Celstran der Firma Hoechst AG). Es handelt sich dabei z.B. um Polyamid oder Polypropylen 6.6 mit 30 bis 70 Gew.-% Glasfasern mit Längen von ca. 6 mm bis 15 mm, vorzugsweise um etwa 10 mm. Mit diesem Kunststoffmaterial kann auch bei vergrößertem Innenquerschnitt des Leitungsabschnitts zum Unterbringen der Charge problemlos die notwendige Berstdruckfestigkeit (gegebenenfalls bis über 100 Bar) erreicht werden. Der Leitungsabschnitt kann wie ein herkömmlicher Leitungsabschnitt verarbeitet und verlegt werden.

Gemäß Anspruch 3 wird ein großer oder sogar der größte Innenquerschnitt genutzt, um die Charge unterzubringen. Dies ist unter dem Gesichtspunkt wichtig, das gegebenenfalls den Strömungswiderstand des Kältemittels (in flüssiger oder gasförmiger oder flüssig/gasförmiger Konsistenz) beeinflussende Exsikkans in einem relativ großen Querschnitt unterzubringen, in dem eine geringe Strömungsgeschwindigkeit herrscht.

Gemäß Anspruch 4 wird die Charge in einem geraden oder gebogenen Leitungsbereich vorgesehen, abhängig davon, wo am besten Platz zum Unterbringen der Charge zur Verfügung steht. Manchmal haben nämlich gekrümmte Leitungsabschnitte (Schläuche) einen größeren Querschnitt als gerade (Rohre).

Gemäß Anspruch 5 ist die Charge in einer Aufnahme untergebracht, die das meist granulatförmige Exsikkans zusammenhält, und aus Lagerungs- und Montagegründen sowie bei der Positionierung der Charge im Leitungsabschnitt zweckmäßig ist. Wird die Aufnahme satt passend eingesetzt, dann hat das gesamt Kältemittel die Charge zu durchsetzen. Ist hingegen ein Spiel vorgesehen, dann kann zumindest ein Teil des Kältemittelstroms an der Charge vorbeiströmen.

Gemäß Anspruch 6 ist die Charge in der Lage, betriebsbedingte Verformungen des Leitungsabschnitts, insbesondere einer Schlauchleitung, mitzumachen, ohne Schaden zu erleiden, oder die Beweglichkeit des Leitungsabschnitts zu beeinträchtigen.

Da die Fahrzeughersteller relativ hohe Anforderungen an die Reinheit des Kältemittels auch über lange Betreibszeiten stellen, ist es zweckmäßig, gemäß Anspruch 7 mit der Charge einen Feinfilter zu kombinieren, der Partikel im Kältemittel und auch aus dem Exsikkans austretende Verunreinigungen oder Partikel auffängt. Eine Porengröße von 50 µ erfüllt auch strengste Anforderungen der Fahrzeughersteller. Zweckmäßigerweise ist der Feinfilter durch mindestens eine Lage oder einen Formkörper aus einem Kunststoff-Filtermaterial gebildet. Der Feinfilter ist so angeordnet, dass der gesamte Kältemittelstrom zu passieren hat.

Gemäß Anspruch 8 bildet der Feinfilter gleichzeitig eine Aufnahme oder zumindest einen großen Teil der Aufnahme des Exsikkans. Durch die Positionierung der Charge werden gleichzeitig der Feinfilter und die Charge lagegesichert.

Alternativ ist gemäß Anspruch 9 der Feinfilterstrom stromab der Charge angeordnet.

Gemäß Anspruch 10 wird der gesamte Kältemittelstrom durch den Feinfilter geführt, während gegebenenfalls nur ein Teil der Kältemittelströmung auch über die Charge geleitet wird. Dies kann im Hinblick auf einen möglichst geringen Strömungswiderstand im Bereich der Charge zweckmäßig sein.

Gemäß Anspruch 11 wird der Anschlussbereich des Leitungsabschnitts an ein Gehäuse, z.B. des Kondensators, des Verdampfers der Mengenregeleinheit, oder eines Akkumulator-Ölabscheiders zum Einbringen der Charge in den Leitungsabschnitt genutzt, weil das in diesem Bereich üblicherweise vorgesehene Anschlusselement Zugang zum Inneren des Leitungsabschnittes ermöglicht, um die Charge einfach einbringen oder herausnehmen zu können.

Anhand der Zeichnungen werden Ausführungsformen des Erfindungsgegenstandes erläutert. Es zeigen:
- Fig. 1: schematisch einen ersten Typus einer Klimaanlage,
- Fig. 2: einen zweiten Typus einer Klimaanlage, und
- Fig. 3 bis 5: Längsschnitte mehrerer Detailvariationen zu den Fig. 1 und 2.

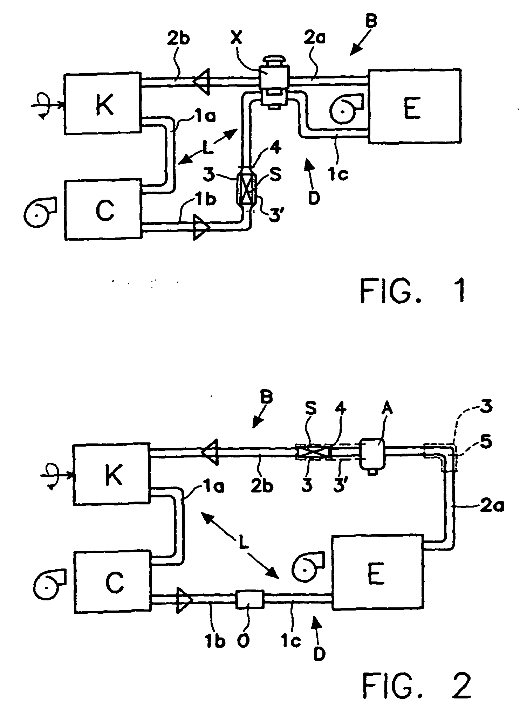

Eine in Fig. 1 mit einem Expansionsventil X als Mengenregeleinheit arbeitende Klimaanlage B für ein Fahrzeug, insbesondere ein Automobil, weist einen Kühlkreislauf D auf, bei dem in einem Kältemittel-Leitungskreis L als Antriebsquelle ein Kompressor K vorgesehen ist, der über einen Leitungsabschnitt 1a einen Kondensator mit Kältemittel speist, von dem sich ein weiterer Leitungsabschnitt 1b zum Expansionsventil X erstreckt. Der Leitungsabschnitt 1b wird stromab des Expansionsventils X von einem weiteren Leitungsabschnitt 1c fortgesetzt, der in einen Verdampfer E mündet. Vom Verdampfer E erstreckt sich ein Leitungsabschnitt 2a ebenfalls zum Expansionsventil X, der durch einen Leitungsabschnitt 2b zurück zum Kompressor K verlängert ist. Die Leitungsabschnitte 1a, 1b, 1c liegen an der Hochdruckseite, die Leitungsabschnitte 2a, 2b hingegen auf der Niederdruckseite des Kältemittelkreises D.

In einem der Leitungsabschnitte 1b, 1c, vorzugsweise im Leitungsabschnitt 1b, ist im Inneren eine Exsikkans-Charge S angeordnet, zweckmäßigerweise in einem Leitungsabschnittsbereich 3, der denselben Innenquerschnitt hat wie der Leitungsabschnitt 1b, oder in einem im Innenquerschnitt vergrößerten Leitungsabschnittsbereich 3'. Der Innenquerschnitt im Bereich 3, 3' kann rund sein, oder jede beliebige Querschnittsform aufweisen. Bei 4 sind Verbindungseinrichtungen im Leitungsabschnitt 1b angedeutet, z.B. Rohrverschraubung oder Schlauchverbinder, der bzw. die zum Einsetzen und Austauschen der Exsikkans-Charge S nutzbar sind. Es ist denkbar, den Leitungsabschnitt 1b von vornherein mit integrierter Exsikkans-Charge S herzustellen.

Die gezeigte Position der Exsikkans-Charge S im Leitungsabschnitt 1b ist nur beispielsweise aufzufassen, die Charge S könnte an jeder beliebigen Stelle des Leitungsabschnitts 1b vorgesehen sein, oder auch im Leitungsabschnitt 1c. Möglich bzw. zweckmäßig ist auch eine Position der Exsikkans-Charge S beim Anschluß des Leitungsabschnitts 1b oder 1c an das Gehäuse beispielsweise des Kondensators, des Expansionsventils X oder sogar des Verdampfers E. Die Leitungsabschnitte 1b, 1c sind Leichtmetall- oder Kunststoff-Rohre und/oder verstärkte Kunststoff-Schläuche (Hochdruckhydraulik-schläuche), die gerade und/oder bogenförmig verlaufen. Die Exsikkans-Charge S könnte auch in einem bogenförmigen Bereich angeordnet sein.

Fig. 2 betrifft einen anderen Typus einer Klimaanlage B mit einem Kühlkreislauf D, der im Kältemittel-Leitungskreis L stromab des Kompressors K (zweckmäßigerweise eines leistungsgeregelten Kompressors oder eines über eine zyklisch schaltende Kupplung zuschaltbaren Kompressors) einen Kondensator C, stromab desselben eine Blende O als Mengenregelvorrichtung und stromab der Blende O den Verdampfer E aufweist. Stromab des Verdampfers E kann ein Akkumulator-Ölabscheider A vorgesehen sein. Die einzelnen Komponenten sind durch Leitungsabschnitte 1a, 1b, 1c und 2a, 2b in den Leitungskreis geschaltet, wobei die Leitungsabschnitte 1a, 1b, 1c an der Hochdruckseite und die Leitungsabschnitte 2a, 2b an der Niederdruckseite liegen. Die Blende O ist eine Meßblende, die die Menge des Kältemittels (in flüssigem Zustand) in Abhängigkeit von der jeweiligen Druckdifferenz einstellt. Zweckmäßigerweise auf der Niederdruckseite ist im Leitungsabschnitt 2b in einem Bereich 3 eine Exsikkans-Charge S innen untergebracht. Der Bereich 3 des Leitungsabschnittes 2b kann beispielsweise durch Verbindungseinrichtungen 4 an zumindest einem Ende zum Einsetzen und Entnehmen der Charge S geöffnet werden. Die Exsikkans-Charge S könnte auch im Leitungsabschnitt 2a angeordnet sein, oder in einem Bogen dieses Leitungsabschnittes 2a (gestrichelt angedeutet). Im Regelfall ist das Kältemittel an der Niederdruckseite, d.h. beim Durchströmen der Exsikkans-Charge S im wesentlichen gasförmig. Die Leitungsabschnitte können von metallischen Rohren und/oder Schläuchen gebildet werden. Bei beiden gezeigten Klimaanlagentypen können ferner einige der Leitungsabschnitte von Rohren und andere von Schläuchen gebildet werden. Der Bereich 3 in Fig. 2 weist denselben Innenquerschnitt auf wie der Leitungsabschnitt 2b. Es ist aber denkbar, wie in Fig. 1 angedeutet, den Bereich 3' mit gegenüber dem angrenzenden Leitungsabschnitt 2b vergrößerten Innenquerschnitt auszubilden.

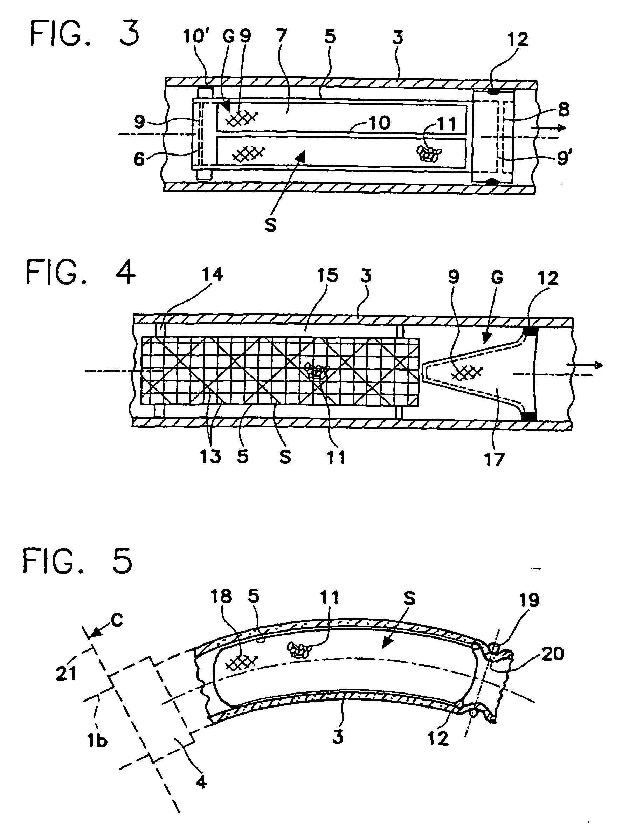

Fig. 3 verdeutlicht die Unterbringung der Exsikkans-Charge S im Bereich 3, z.B. in einem metallischen Rohr. Das Exsikkans liegt beispielsweise in Form eine Granulats 11 (z.B. eines Zeolith-Granulats) in einer Aufnahme 5 vor, die als Patrone, z.B. aus Kunststoff, mit mehreren fensterartigen oder runden Durchgängen 6, 7, 8 ausgebildet ist. Die Durchgänge sind mit durchlässigem Material verschlossen, so daß das Granulat 11 nicht herausfallen kann. Zweckmäßigerweise wird zum Verschließen der Durchgänge ein Kunststoff-Filtergewebe verwendet, das bei 9 (Anströmseite) eine gleichmäßige und sehr kleine Porengröße von ca. 30 µ bis µ besitzt, hingegen im Durchgang 8 eine wesentlich größere Porengröße aufweist (Abströmseite 9'). Die Patrone 10 ist mit einer Dichtung 12 eingesetzt, so daß der gesamte Kältemittelstrom durch die Patrone 10 gezwungen wird, und beim Durchströmen des Filtermaterials mit der kleinen Porengröße eine große Anströmfläche vorfindet, hingegen beim Abströmen durch das Filtermaterial 9' mit der großen Porengröße eine kleinere Anströmfläche haben kann. Das Filtermaterial mit der kleinen Porengröße bildet einen in die Charge S integrierten Feinfilter G zum Zurückhalten kleinster Partikel. Um auch aus dem Granulat 11 herausgelöste Partikel aufzufangen, ehe sie in den weiteren Kreis gelangen, könnte die Patrone 10 in umgekehrter Lage (bei gleicher Strömungsrichtung) eingesetzt sein, so daß das Kältemittel durch den Durchgang 8 (großporiges Filtermaterial bei 9') ein- und über die Durchgänge 7, 6 abströmt. Mit 10' sind Distanzelemente angeordnet, die der Positionierung der Patrone 10 im Bereich 3 dienen und auch die allseitige Anströmung der Patrone 10 sicherstellen. Die Dichtung 12, z.B. wenigstens ein O-Ring, kann gleichzeitig zur Positionierung der Patrone 10 dienen. Es ist aber auch denkbar, die Wand des Bereiches 3 geringfügig einzudrücken, um einen Anschlag für die Patrone zu bilden. Es könnte der Bereich 3 auch ein Abschnitt eines flexiblen Schlauches sein.

In Fig. 4 ist das Granulat 11 in einem Käfig 13 aus beliebigem Werkstoff, zweckmäßigerweise Kunststoff, geborgen, der mit Distanzelementen 14 im Bereich 3 (Rohr aus Kunststoff oder Leichtmetall oder Schlauch aus verstärktem Kunststoff) positioniert ist. Ein Teil des Kältemittels kann hierbei die Exsikkans-Charge S umgehen. Stromab des Käfigs ist ein Feinfilter G lagegesichert, der aus einem Filtergewebe 9 mit kleiner Porengröße, z.B. um 50 µ, besteht und mit der Dichtung 12 lagegesichert ist. Im Hinblick auf eine möglichst große Durchströmfläche hat der Feinfilter G eine kegelige Form. Es ist denkbar, den Feinfilter G eine andere, zu einer großen Anströmoberfläche führende Form zu geben. Zum Lagesichern des Käfigs 13 und des Feinfilters G könnte die Wand des Bereichs 3 eingedrückt sein (vorne und hinten), oder könnten Sicherungselemente eingesetzt sein (z.B. Spreizringe).

In Fig. 5 ist die Exsikkans-Charge S in einem bogenförmigen Bereich 3, z.B. eines Schlauches aus Kunststoff (oder einem Metallrohr), angeordnet. Das Granulat 11 ist in einem Säckchen 18 geborgen, das für das Kältemittel durchlässig ist und das Granulat am Ausspülen hindert. Die Charge S bildet eine biegsame Einheit, die Biegungen des Bereiches 3 mitzumachen vermag. Die Charge S ist relativ satt in dem Bereich 3 eingepaßt und gegebenenfalls durch die Dichtung 12 abgestützt, die auch verhindert, daß Kältemittel die Charge umgeht. Zweckmäßigerweise stromab der Charge S ist ein nicht-dargestellter Feinfilter vorgesehen. Zur Positionierung der Charge S kann die Wand des Bereiches 3, z.B. durch einen Spannring 19, zur Bildung einer Anschlagschulter 20 eingeschnürt sein.

Gestrichelt ist angedeutet, daß der Bereich 3 bis zu einer Verbindungseinrichtung 4 führt, mit der der Leitungsabschnitt an ein Gehäuse 21 oder an dem weiteren Teil des Leitungsabschnitts 1b angeschlossen ist. Das Gehäuse 21 ist beispielsweise das Gehäuse des Kondensators C. Die Verbindungseinrichtung 4 kann ein Rohr- oder Schlauchverbinder sein, der verschraubt, verklebt oder nur durch Pressen hermetisch dicht ist.

Auch die Patrone 10 bzw. der Käfig 13 können biegsam sein, um Biegungen des Bereiches 3 bzw. des jeweils die Charge aufnehmenden Leitungsabschnittes mitmachen zu können. Denkbar ist es, mehrere Exsikkans-Chargen S unmittelbar hintereinander oder sogar verteilt in den Leitungsabschnitten zu plazieren oder das Granulat zum Bilden der Charge ohne Aufnahme unmittelbar zwischen zwei beabstandete Filterelemente einzufüllen, die im Bereich 3 bzw. im jeweiligen Leitungsabschnitt positioniert sind. Der die Charge S aufnehmende Leitungsabschnitt 1a, 1b, 1c, 2a, 2b, 3, 3' läßt sich, insbesondere mit für die Charge S vergrößertem Innenquerschnitt, mit genügender Berstdruckfestigkeit besonders zweckmäßig aus langfaserverstärktem Thermoplast (Handelsname: Celstran der Firma Hoechst AG) spritzen oder extrudieren. Beispiele für einen derart langfaserverstärkten Thermoplasten sind Polyamid 6.6 oder Polypropylen 6.6 mit 30 - 70 Gew.-% Glasfasern mit Längen um ca. 10 mm.

## Patentansprüche

1. Klimaanlage (B) für ein Land-, Luft- oder Wasserfahrzeug, insbesondere ein Automobil, mit einem einen geschlossenen Kältemittel-Leitungskreis (L) aufweisenden Kühlkreislauf (D), in dem zwischen Leitungsabschnitten (1a, 1b, 1c, 2a, 2b) aus Rohren aus Leichtmetall oder Kunststoff oder Schläuchen aus verstärktem Kunststoff oder Elastomer ein Kompressor (K), druckseitig nach diesem ein Kondensator (C), eine Mengenregeleinheit (X, O) und ein Verdampfer (E) vorgesehen sind, und mit einer im Kühlkreislauf (D) angeordneten Charge (S) eines Exsikkans (11) zum Aufnehmen von zumindest Wasser aus dem Kältemittel, **dadurch gekennzeichnet, dass** die Exsikkans-Charge (S) ohne eigenen Behälter unmittelbar im Inneren mindestens eines Leitungsabschnittsbereichs (3, 3') angeordnet ist, der an zumindest einem Ende mit dem Leitungsabschnitt (1a, 1b, 1c, 2a, 2b) einstückig ist.

2. Klimaanlage nach Anspruch 1, **dadurch gekennzeichnet, dass** der die Exsikkans-Charge (S) aufnehmende Leitungsabschnitt ein aus langfaserverstärktem Thermoplast bestehendes Rohr ist, vorzugsweise aus mit Glasfasern mit Längen von ca. 5 mm bis 15 mm, vorzugsweise um etwa 10 mm und 30 bis 70 Gew.-% verstärktem, spritzgeformtem oder extrudiertem Polyamid oder Polypropylen 6.6.

3. Klimaanlage nach Anspruch 1 oder 2, **dadurch gekennzeichnet, dass** im Kältemittel-Leitungskreis (L) Leitungsabschnitte (1a, 1b, 1c, 2a, 2b) unterschiedlich großer Innenquerschnitte vorgesehen sind, und dass die Exsikkans-Charge (S) in einem Leitungsabschnitt mit einem großen oder dem größten Innenquerschnitt angeordnet ist.

4. Klimaanlage nach Anspruch 1, **dadurch gekennzeichnet, dass** die Exsikkans-Charge (S) in einem geraden oder in einem bogenförmigen Leitungsabschnitt angeordnet ist.

5. Klimaanlage nach wenigstens einem der vorhergehenden Ansprüche, **dadurch gekennzeichnet, dass** die Exsikkans-Charge (S) in einer Aufnahme (5), wie einer Patrone (10), einem Käfig (13) oder einem Säckchen (18) enthalten ist, und dass die Aufnahme (5) satt passend oder mit einem Spiel (15) im Inneren des Leitungsabschnitts angeordnet ist.

6. Klimaanlage nach wenigstens einem der vorhergehenden Ansprüche, **dadurch gekennzeichnet, dass** die Exsikkans-Charge (S) mit ihrer Aufnahme (5) ein zumindest begrenzt biegsames Exsikkans-Modul ist.

7. Klimaanlage nach wenigstens einem der vorhergehenden Ansprüche, **dadurch gekennzeichnet, dass** in dem die Exsikkans-Charge (S) enthaltenden Leitungsabschnitt zusätzlich ein Feinfilter (G), vorzugsweise mit einer Porengröße zwischen 50 µ und 120 µ, vorgesehen ist.

8. Klimaanlage nach Anspruch 7, **dadurch gekennzeichnet, dass** der Feinfilter (G) eine Aufnahme (5) der Exsikkans-Charge (S) zumindest zum Teil bildet bzw. in die Aufnahme eingegliedert ist.

9. Klimaanlage nach Anspruch 7, **dadurch gekennzeichnet, dass** der Feinfilter (G) stromab der Exsikkans-Charge (S) angeordnet ist.

10. Klimaanlage nach wenigstens einem der vorhergehenden Ansprüche, **dadurch gekennzeichnet, dass** die Exsikkans-Charge (S) und der Feinfilter (G) im Leitungsabschnitt derart angeordnet sind, dass der Feinfilter der gesamten Kältemittelströmung und die Exsikkans-Charge (S) zumindest einem Teil der gesamten Kältemittelströmung ausgesetzt ist.

11. Klimaanlage nach Anspruch 1, **dadurch gekennzeichnet, dass** der die Exsikkans-Charge (S) enthaltende Leitungsabschnittsbereich (3, 3') an einem Ende an ein Gehäuse (21, A) des Kondensators (C), des Verdampfers (E), der Mengenregeleinheit (X, O) oder eines Akkumulator-Ölabscheiders angeschlossen ist.

## Claims

1. Air-conditioning system (B) for a landcraft, aircraft or watercraft, in particular an automobile, with a cooling circuit (D) which has a closed refrigerant line circuit (L) and in which are provided, between line sections (1a, 1b, 1c, 2a, 2b) consisting of tubes made from light metal or plastic or of hoses made from reinforced plastic or elastomer, a compressor (K), downstream of the latter on the pressure side, a condenser (C), a quantity regulation unit (X, O) and an evaporator (E), and with a batch (S), arranged in the cooling circuit (D), of a desiccant (11) for the absorption of at least water from the refrigerant, **characterized in that** the desiccant batch (S) is arranged without a specific container directly inside at least one line-section region (3, 3') which at at least one end is in one piece with the line section (1a, 1b, 1c, 2a, 2b).

2. Air-conditioning system according to Claim 1, **characterized in that** the line section receiving the desiccant batch (S) is a tube consisting of long-fibre-reinforced thermoplastic, preferably of injection-moulded or extruded polyamide or polypropylene 6.6 reinforced with glass fibres having lengths of approximately 5 mm to 15 mm, preferably of around 10 mm, and with 30 to 70% by weight.

3. Air-conditioning system according to Claim 1 or 2, **characterized in that** line sections (1a, 1b, 1c, 2a, 2b) having internal cross sections of different size are provided in the refrigerant line circuit (L), and **in that** the desiccant batch (S) is arranged in a line section having a large or the largest internal cross section.

4. Air-conditioning system according to Claim 1, **characterized in that** the desiccant batch (S) is arranged in a straight or an arcuate line section.

5. Air-conditioning system according to at least one of the preceding claims, **characterized in that** the desiccant batch (S) is contained in a receptacle (5), such as a cartridge (10), a cage (13) or a small bag (18), and **in that** the receptacle (5) is arranged with a snug fit or with play (15) inside the line section.

6. Air-conditioning system according to at least one of the preceding claims, **characterized in that** the desiccant batch (S), together with its receptacle (5), is a desiccant module having at least limited flexibility.

7. Air-conditioning system according to at least one of the preceding claims, **characterized in that** a fine filter (G), preferably with a pore size of between 50 µ and 120 µ, is additionally provided in the line section containing the desiccant batch (S).

8. Air-conditioning system according to Claim 7, **characterized in that** the fine filter (G) at least partially forms a receptacle (5) of the desiccant batch (S) or is incorporated into the receptacle.

9. Air-conditioning system according to Claim 7, **characterized in that** the fine filter (G) is arranged downstream of the desiccant batch (S).

10. Air-conditioning system according to at least one of the preceding claims, **characterized in that** the desiccant batch (S) and the fine filter (G) are arranged in the line section in such a way that the fine filter is exposed to the entire refrigerant flow and the desiccant batch (S) is exposed at least to part of the entire refrigerant flow.

11. Air-conditioning system according to Claim 1, **characterized in that** the line-section region (3, 3') containing the desiccant batch (S) is connected at one end to a housing (21, A) of the condenser (C), of the evaporator (E), of the quantity regulation unit (X, O) or of an accumulator oil separator.

## Revendications

1. Dispositif de climatisation (B) pour un véhicule terrestre, aérien ou naval, en particulier une automobile, avec un circuit de refroidissement (D), présentant un circuit de tuyauterie de fluide frigorigène (L) fermé, dans lequel, entre des tronçons de conduite (1a, 1b, 1c, 2a, 2b) formés de tubes en métal léger ou de tuyaux souples en matière synthétique renforcés ou en élastomère, sont prévus un compresseur (K), côté refoulement en aval de celui-ci un condenseur (C), une unité de régulation de débit (X, O) et un évaporateur (E) et avec une charge (S), disposée dans le circuit de refroidissement (D), d'un siccatif (11) pour capter au moins de l'eau issue du fluide frigorigène, **caractérisé en ce que** la charge (S) de siccatif est disposée sans récipient propre, directement à l'intérieur d'au moins une zone de tronçon de conduite (3, 3'), réalisée d'une seule pièce en au moins une extrémité avec le tronçon de conduite (1a, 1b, 1c, 2a, 2b).

2. Dispositif de climatisation selon la revendication 1, **caractérisé en ce que** le tronçon de conduite recevant la charge (S) de siccatif est un tube formé d'un matériau thermoplastique renforcé par des fibres longues, de préférence d'un polyamide ou d'un polypropylène 6.6, moulé par injection ou extrudé, renforcé par des fi bres en verre ayant des longueurs d'environ 5 mm à 15 mm, de préférence d'environ 10 mm, et formant de 30 à 70 % en poids.

3. Dispositif de climatisation selon la revendication 1 ou 2, **caractérisé en ce que**, dans le circuit de conduite de fluide frigorigène (L) sont prévus des tronçons de conduite (1a, 1b, 1c, 2a, 2b) ayant des sections transversales intérieures de tailles différentes, et **en ce que** la charge (S) de siccatif est disposée dans un tronçon de conduite ayant une section transversale intérieure grande ou maximale.

4. Dispositif de climatisation selon la revendication 1, **caractérisé en ce que** la charge (S) de siccatif est disposée dans un tronçon de conduite, rectiligne ou à forme coudée.

5. Dispositif de climatisation selon au moins l'une des revendications précédentes, **caractérisé en ce que** la charge (S) de siccatif est contenue dans un logement (5), tel qu'une cartouche (10), un panier (13) ou un sachet (18), et **en ce que** le logement (5) est disposé de façon ajustée serrée ou avec un jeu (15), à l'intérieur du tronçon de conduite.

6. Dispositif de climatisation selon au moins l'une des revendications précédentes, **caractérisé en ce que** la charge (S) de siccatif avec son logement (5) est un module de siccatif présentant une flexibilité au moins limitée.

7. Dispositif de climatisation selon au moins l'une des revendications précédentes, **caractérisé en ce que**, dans le tronçon de conduite contenant la charge (S) de siccatif, est en plus un filtre fin (G), de préférence ayant une taille de pores comprise entre 50 µm et 120 µm.

8. Dispositif de climatisation selon la revendication 7 **caractérisé en ce que** le filtre fin (G) forme, au moins en partie, un logement (5) de la charge (S) de siccatif ou bien est intégré dans le logement.

9. Dispositif de climatisation selon la revendication 7, **caractérisé en ce que** le filtre fin (G) est disposé en aval de la charge (S) de siccatif.

10. Dispositif de climatisation selon au moins l'une des revendications précédentes **caractérisé en ce que** la charge (S) de siccatif et le filtre fin (G) sont disposés dans le tronçon de conduite de manière que le filtre fin soit exposé à l'ensemble de l'écoulement de fluide frigorigène et que la charge (S) de siccatif soit exposée à au moins une partie de l'écoulement global de fluide frigorigène.

11. Dispositif de climatisation selon la revendication 1 **caractérisé en ce que** la zone de tronçon de conduite (3-3'), contenant la charge (S) de siccatif, est raccordée, à une extrémité, à un boîtier (21, A) du condenseur (C), de l'évaporateur (E), de l'unité de régulation de débit (X, O) ou d'un séparateur d'huile-accumulateur.
